# EUROPEAN PATENT APPLICATION

(11) **EP 2 642 286 A1**
(43) Date of publication of application: **25.09.2013**
(21) Application number: 11841620.5
(22) Date of filing: 18.11.2011
(51) Int. Cl.: G01N 30/88, G01N 27/62, G01N 30/06, G01N 30/72, G01N 30/74

(54) **NOVEL METHOD FOR ANALYZING GLYCOSAMINOGLYCAN**

(30) Priority: 18.11.2010 JP 2010258385
(71) Applicant: CellSeed Inc., Tokyo 162-0056 (JP); National University Corporation Hokkaido University, Sapporo-shi, Hokkaido 060-0808 (JP)
(72) Inventor: TAKEGAWA, Yasuhiro, Hokkaida 060-0808 (JP); SHINOHARA, Yasuro, Hokkaida 060-0808 (JP); SAKAI, Hideaki, Tokyo 162-0056 (JP)
(74) Representative: HOFFMANN EITLE
(86) International application number: PCT/JP2011/076691
(87) International publication number: WO 2012/067236

(57) **Abstract**

A method of analyzing a sugar chain by high performance liquid chromatography uses a column packed with a stationary phase including anion and cation exchangers. A fluorescence-labeled sample is prepared for the analysis by decomposing glycosaminoglycans to be analyzed into their constitutional units being disaccharides, capturing the disaccharides by glycoblotting, releasing the disaccharides by acid treatment, and subsequently reductively aminating the released disaccharides. In this method, two or more types of glycosaminoglycans can be simultaneously analyzed.

## Description

### TECHNICAL FIELD

The present invention relates to a novel method of analyzing a glycosaminoglycan, which is useful in the fields of, for example, biochemistry, biology, pharmacy, drug discovery, and medicine. In particular, the present invention relates to a method of simultaneously analyzing two or more glycosaminoglycans by liquid chromatography using a column packed with a stationary phase including anion and cation exchangers.

### BACKGROUND ART

Liquid chromatography has been used for separation analysis of a solution specimen containing a large number of components, using a reversed-phase column for analyzing hydrophobic molecules and a normal-phase column for analyzing hydrophilic molecules. Biological specimens, however, contain both hydrophobic molecules and hydrophilic molecules. Usual separation analysis of such a biological specimen requires to separately analyze the hydrophobic and hydrophilic molecules using two apparatuses, one equipped with a reversed-phase column and another equipped with a normal-phase column; or to purify the hydrophobic molecules only with a reversed-phase trapping column and then analyze the hydrophobic molecules with a reversed-phase column; or, conversely, to purify the hydrophilic molecules only with a normal-phase trapping column and then analyze the hydrophilic molecules with a normal-phase column. Thus, the analytical processes are problematically complicated (see Non-Patent Literatures 1 to 3). In particular, sugar chain molecules have restricted analytical approaches and require complicated handling, and thus require a simpler and effective analytical procedure.

Glycosaminoglycans (GAGs) are known as polysaccharides mainly present in cell membrane and extracellular matrix (ECM) in a protein-bound or unbound form and are attracting attention in the fields of, for example, cell engineering and regenerative medicine. Glycosaminoglycans each have a chemical structure including a repeating basal disaccharide structure consisting of uronic acid and hexosamine and being optionally sulfated to various degrees. Glycosaminoglycans are mainly classified, depending on the disaccharides constituting them, into three groups: a first group of compounds composed of chondroitin sulfate or dermatan sulfate, a second group of compounds composed of heparan sulfate or heparin, and a third group of hyaluronic acid compounds. For example, the compounds composed of chondroitin sulfate or dermatan sulfate consist of a disaccharide: uronic acid (glucuronic acid or iduronic acid) (β1→3)N-acetylgalactosamine, the compounds composed of heparan sulfate or heparin consist of a disaccharide: uronic acid (glucuronic acid or iduronic acid) (β1→4)N-acetylglucosamine, and the hyaluronic acid consists of a disaccharide: glucuronic acid (β1→3)N-acetylglucosamine. In addition, the structure is highly diverse due to a combination with modification by sulfation. These glycosaminoglycans are known as important biological materials having both physicochemical properties derived from characteristic viscoelasticity and biological properties mediated by interactions with various functional proteins, depending on the molecular size and the sulfation pattern. These glycosaminoglycans are usually analyzed through decomposition into disaccharides, isolation of the disaccharides by high performance liquid chromatography (HPLC), and determination of the absorbance or fluorescence intensity. HPLC, however, cannot sufficiently isolate GAGs and can therefore analyze only one glycosaminoglycan among the compounds composed of chondroitin sulfate or dermatan sulfate, the compounds composed of heparan sulfate or heparin, and the hyaluronic acid compounds (see Non-Patent Literatures 4 to 8). In another reported method utilizing liquid chromatography/mass spectrometry (LC/MS), glycosaminoglycans are isolated by HPLC and then analyzed by multi-stage tandem mass spectrometry (MSn). Since the disaccharide constituting a glycosaminoglycan has a variety of isomers, the MSn analysis is very complicated, and can barely isolate the disaccharide as described above. Consequently, the current analytical approaches can identify only one type of the compounds composed of chondroitin sulfate or dermatan sulfate, the compounds composed of heparan sulfate or heparin, and the hyaluronic acid compounds (see Non-Patent Literatures 9 to 11). Accordingly, conventional technologies need considerable effort in purification and analytical processes, and cannot qualitatively or quantitatively analyze multiple types of glycosaminoglycans at the same time.

In order to solve these problems, Patent Literature 1 discloses a technique for simultaneously separating and analyzing at least two types of sugar chain isomeric molecules and glycopeptide isomeric molecules by high performance liquid chromatography using a column packed with a stationary phase including anion and cation exchangers. This method, however, analyzes sugar chain isomeric molecules or glycopeptide isomeric molecules in a relatively large molecular form or in a high molecular weight form without decomposing them and therefore can actually separate and analyze limited types of specimens. Herein, high performance liquid chromatography using a column packed with a stationary phase including anion and cation exchangers is expected to be an effective method for analyzing, for example, a biological specimen having bipolarity; however, no method of specifically separating and analyzing a sugar chain by this method has been found yet (see Patent Literatures 2 to 4).

In conventional analysis of glycosaminoglycan disaccharides, reversed phase ion pair chromatography, ion exchange chromatography, or capillary electrophoresis is generally used, and these methods induce, for example, a significantly low ionization efficiency and are therefore incompatible with connection to a mass spectrometer. No isolation process that can be readily connected to a mass spectrometer without decreased ionization efficiency has been found yet.

### CITATION LIST

### PATENT LITERATURE

[Patent Literature 1] Japanese Patent Laid-Open No. 2007-93585
[Patent Literature 2] National Publication of International Patent Application No. 2010-509566
[Patent Literature 3] National Publication of International Patent Application No. 2005-536488
[Patent Literature 4] National Publication of International Patent Application No. 2002-537417

### NON-PATENT LITERATURE

[Non-Patent Literature 1] Anal. Chem., 75, 5628-5637 (2003)
[Non-Patent Literature 2] Anal. Chem., 76, 6560-6565 (2004)
[Non-Patent Literature 3] J. Proteome Res., 3, 556-566 (2004)
[Non-Patent Literature 4] Anal. Sci., 8, 793-797 (1992)
[Non-Patent Literature 5] J. Chromatogr. A, 830, 197-201 (1999)
[Non-Patent Literature 6] Anal. Biochem., 269, 367-378 (1999)
[Non-Patent Literature 7] J. Biol. Chem., 275, 2269-2275 (2000)
[Non-Patent Literature 8] J. Biol. Chem., 284, 25714-25722 (2000)
[Non-Patent Literature 9] J. Am. Soc. Mass Spectrom., 11, 916-920 (2000)
[Non-Patent Literature 10] Anal. Chem., 75, 2985-2995 (2003)
[Non-Patent Literature 11] J. Chromatogr. B, 824, 139-147 (2005)

### SUMMARY OF INVENTION

### TECHNICAL PROBLEM

Glycobiology has progressed, and thereby the opportunity of analyzing various sugar chain compounds has been increased. Conventional analysis has taken large amounts of time and effort. It is an object of the present invention to solve these problems and to provide a method of efficiently analyzing a plurality of glycosaminoglycans simply and simultaneously by one-time analysis by high performance liquid chromatography using a column packed with a stationary phase including anion and cation exchangers.

### SOLUTION TO PROBLEM

The present inventors, who have performed investigations from various angles in order to solve the above-mentioned problems, have found that a plurality of glycosaminoglycans can be simultaneously separated and analyzed by one-time analysis by decomposing glycosaminoglycans in a biological specimen into disaccharides, finally preparing a fluorescence-labeled analytical sample, and applying the sample to high performance liquid chromatography using an zwitterionic column. The present invention has been accomplished based on these findings. The present invention provides an analytical method that is superior to conventional methods in simplicity and analytical coverage and can analyze glycosaminoglycans contained in various biological materials.

That is, the present invention provides a method of analyzing a sugar chain characterized by simultaneous analysis of two or more glycosaminoglycans by high performance liquid chromatography using a column packed with a stationary phase including anion and cation exchangers. The invention also provides a method of analyzing a sugar chain using a fluorescence-labeled sample prepared by decomposing glycosaminoglycans to be analyzed into their constitutional units being disaccharides, capturing the disaccharides by glycoblotting, releasing the disaccharides by acid treatment, and subsequently reductively aminating the released disaccharides. The inventors believe that the present invention is very important one based on a unique novel idea of simultaneous measurement of a plurality of glycosaminoglycans.

### ADVANTAGEOUS EFFECTS OF INVENTION

The present invention allows simultaneous measurement of a plurality of glycosaminoglycans by one-time analysis. The present invention provides an analytical method that is superior to conventional methods in simplicity and analytical coverage and can analyze glycosaminoglycans contained in various biological materials.

### BRIEF DESCRIPTION OF DRAWINGS

Fig. 1 is a diagram briefly showing the types of glycosaminoglycans used in Example 1, constitutional disaccharides obtained therefrom, and the internal standard substance used in the analysis.
Fig. 2 is a diagram showing preparation of fluorescence-labeled glycosaminoglycan disaccharides in Example 1 and an example of zwitterionic ion chromatographic separation/analysis.
Fig. 3 is a diagram showing an example of zwitterionic ion chromatographic separation/analysis of fluorescence-labeled glycosaminoglycan disaccharides prepared from cultured cells (NIH/3T3) in Example 2.
Fig. 4 shows the reproducibility data of absolute amounts and relative amounts of fluorescence-labeled glycosaminoglycan disaccharides prepared from cultured cells (CHO, 2x10⁶ cells) in Example 3.
Fig. 5 shows the results of LC/MS separation/analysis of fluorescence-labeled glycosaminoglycan disaccharides in Example 4.

### DESCRIPTION OF EMBODIMENTS

The present invention relates to a method of simultaneously analyzing two or more glycosaminoglycans by high performance liquid chromatography using a column packed with a stationary phase including anion and cation exchangers. The stationary phase including anion and cation exchangers can be, for example, an organic resin core having a large number of zwitterionic non-aromatic groups covalently bonded to the surface thereof. For example, National Publication of International Patent Application No. 2002-529714 describes such a stationary phase, which will now be more specifically described.

The term "organic resin" in the stationary phase refers to an organic polymer or copolymer of synthetic or natural origin comprising mono- or oligo-vinyl monomer units such as styrene and its addition derivatives, acrylic acid or methacrylic acid, alkyl acrylates and methacrylates, hydroxyalkyl acrylates and methacrylates, acrylamides and methacrylamides, vinylpyridine and its addition derivatives, divinylbenzene, divinylpyridine, alkylene diacrylate, alkylene dimethacrylate, oligoethylene glycol diacrylate and oligoethylene glycol dimethacrylate with up to 5 ethylene glycol repeat units, alkylene bis(acrylamides), piperidine bis(acrylamide), trimethylolpropane triacrylate, trimethylolpropane trimethacrylate, pentaerythriol triacrylate and tetraacrylate, and mixture thereof. The organic resin can also be a carbohydrate polymer such as agarose, cellulose, dextran, chitosan, or a crosslinked derivative thereof. These organic resins can be used as the core of the stationary phase.

The term "zwitterionic non-aromatic group" refers to an attached ionic non-aromatic functional group having both positive and negative charges in a single pendant group and, as a result, being in lack of net charge under the conditions prevailing during its use. Such a group can be present in the form of a monomer unit directly bonded to the backbone polymer or in the form of a linear or crosslinked polymer or copolymer layer at least partially composed of a zwitterionic non-aromatic monomer unit such that a multivalent zwitterionic non-aromatic group is present in each pendant group bonded to the backbone polymer.

The zwitterionic non-aromatic groups are classified into "strong" and "weak" ionic non-aromatic groups depending on whether the ionic non-aromatic group can dissociate or reach protonation equilibrium in the aqueous pH range applicable to separation of biopolymers. Examples of the strong ionic non-aromatic group include sulfonic acid and quaternary ammonium groups, whereas examples of the weak ionic group include carboxyl groups and alkyl- or hydroxyalkylamines. Examples of strong/strong zwitterionic non-aromatic groups include sulfoalkylammoniobetaines, sulfoalkylarsenobetaines, phosphonoalkylammoniobetaines, and phosphonoalkylarsenobetaines. A weak/strong non-aromatic zwitterion has one strong charge and one weak charge, which means that the net charge is zero when the group is zwitterionic and that the net charge is positive or negative depending on whether the weak ionic group is protonated, or is dissociated as an anionic group, or is present in an intermediate form. A weak/weak zwitterionic group is, for example, a) an α-amino acid having a neutral side chain linked to α-amino group through alkyl coupling and b) an α-amino acid having an uncharged covalent bond with a reactive group on the side chain through protection of α-position and deprotection of the α-amino group. In both cases, an amphoteric pendant group that can have positive, negative, or zero net charge, depending on the surrounding pH, is formed. In the state of zero net charge, these groups being dissociable or capable of being protonated are in an equilibrium between equally and oppositely charged zwitterions and the neutral/neutral, non-zwitterionic form.

Examples of strong-strong zwitterionic non-aromatic groups covalently bonded with a vinyl monomer include 3-(2-acrylamido-2-methylpropanedimethylammonio)-1-butanesulfonate, 4-(2-acrylamido-2-methylpropanedimethylammonio)-1-butanesulfonate, 2-methacryloxyethylphosphorylcholine, 4-[(2-acrylamido-2-methylpropyl)dimethylammonio]butanoate, and 3-[N-decyl,N-(2-methacryloxyethyl)N-methyl]ammoniopropanesulfonate.

Hereinafter, such a polymerizable monomer forming a zwitterionic non-aromatic group is referred to as "zwitterionic monomer". Similarly, a porous selective sorbent forming a zwitterionic non-aromatic group is referred to as a "porous zwitterionic sorbent".

The selection of polymer/copolymer is not essential, and many different organic resins can be used. The dense electrostatic barrier of zwitterionic functional groups provided on the surface prevents the separation carrier lying thereunder from interacting with biopolymers. Thus, the organic resin mainly functions as a stable separation carrier for zwitterionic non-aromatic groups. Accordingly, the selection of polymer/copolymer is not essential provided that the selected organic resin can have chemically bondable reactive groups on its surface. Consequently, zwitterionic non-aromatic pendant groups can bind to many different organic resins.

Specifically, a zwitterionic non-aromatic monomer can be a part of monomers constituting selective sorbent separation carrier of an organic resin, and thereby can function as a porous zwitterionic sorbent.

The selective sorbent separation carrier is porous. More specifically, the pores have a diameter in the range of 5 to 50 nm, preferably 7 to 40 nm, for providing channels for the whole eluate.

The zwitterionic non-aromatic group is linked to the surface of a separation carrier by, for example, graft polymerization of a monomer having the zwitterionic non-aromatic group. Specifically, the entire structure of a selective sorbent separation carrier may build up zwitterionic non-aromatic groups by polymerizing a monomer having the zwitterionic non-aromatic group together with a crosslinking monomer. More specifically, zwitterionic non-aromatic groups are linked to a separation carrier through activation of alkyl groups and are subsequently reacted with ω-dialkylaminoalkylsulfonic acid to form zwitterionic non-aromatic groups on the separation carrier. Surface-linked zwitterionic non-aromatic pendant groups can be obtained by incorporating a dialkylamine (optionally containing hydroxy groups in either or both alkyl substituents) onto an appropriately activated selective sorbent separation carrier, followed by a reaction with an alkyl sulfone, through reactions known in this technical field. In a specific example, the selective sorbent separation carrier is a monolithic porous polymer. The term "zwitterionic non-aromatic group" relates to a functional group linked to the organic resin separation carrier as a single identifiable pendant group. The functional group has both negative and positive ionic charges and is linked to the organic resin separation carrier directly or through a reaction involving activation of the functional group and then covering a functional group present on the organic resin separation carrier with the activated functional group or through polymerization of a monomer containing a functional group having the properties mentioned above.

The selective sorbent separation carrier may be activated by appropriate reactive functional groups on the surface of the organic resin. The functional group can be an epoxy group, a halogenated alkyl group such as an alkyl chloride group or an alkyl bromide group, or a group capable of alkylating the amino group of an aminoalkylsulfonic acid and of forming a zwitterionic non-aromatic group covalently bonded on the selective sorbent separation carrier by the reaction.

In specific examples, the zwitterionic group resulting from the reaction above is a ω-sulfoalkyl-trialkylammonium (sulfobetaine) group, where at least one of the alkyl substituents of the ammonium group is covalently bonded to the selective sorbent separation carrier, and either or both of the remaining alkyl groups can have a hydroxy group.

The column packed with a stationary phase including anion and cation exchangers can be a zwitterionic ion chromatography (ZIC) column described above. This column is available as a commercial product. The ZIC column has been used in separation of inorganic anions and cations or small organic molecular ions. As a result of investigations, the present inventors, surprisingly, have found that the column can readily separate a plurality of glycosaminoglycans having large molecular weights.

In the method of the present invention, a sample containing constitutional disaccharides of glycosaminoglycans described below is supplied to the column, and then organic solvent or a mixture of an organic solvent and water or an aqueous solution is supplied to the column to separate target molecules.

Examples of the organic solvent include acetonitrile, tetrahydrofuran, acetone, dioxane, pyridine, methanol, ethanol, 1-propanol, and 2-propanol. Acetonitrile and methanol are particularly preferred. These organic solvents may be used alone or in combination of two or more thereof.

The organic solvent is used together with water or an aqueous solution. In the case of using an aqueous solution, the salt concentration in and the pH of the aqueous solution can be controlled. Examples of the salt contained in the aqueous solution include ammonium acetate, ammonium carbonate, sodium carbonate, and sodium phosphate. In particular, for a mass spectrometer as the detector, volatile ammonium acetate and ammonium carbonate are preferred. These salts may be used alone or in combination of two or more thereof.

In a mixture of an organic solvent and water or an aqueous solution, the concentration of the organic solvent is, for example, 40% or more and may be 100%. The mixture of an organic solvent and water or an aqueous solvent or an organic solvent is sent to the column to separate target molecules. The concentration of the organic solvent may be continuously or intermittently varied during the separation analysis period (gradient procedure generally used in liquid chromatography), which can increase the efficiency of the separation analysis.

The efficiency of separation (separation time and separability) can be enhanced by optimizing the salt concentration in and the pH (and temperature, as necessary) of the solution. The efficiency of separation analysis can also be enhanced by continuously or intermittently varying the salt concentration and the pH during the separation analysis period (gradient procedure). In the method of the present invention, the molecules eluted from the column or analyzed molecules can be reapplied to the same column at least once. If separation through a column only once is insufficient, the eluate may be reapplied to the same column at least once. The reapplication can enhance the separation of two or more components that have not sufficiently separated.

The present invention is characterized by simultaneous analysis of at least two glycosaminoglycans by high performance liquid chromatography using the thus-prepared column packed with a stationary phase including anion and cation exchangers. Any glycosaminoglycan can be analyzed, and examples thereof include compounds composed of chondroitin sulfate or dermatan sulfate, compounds composed of heparan sulfate or heparin, hyaluronic acid compounds, and keratan sulfates. In the present invention, glycosaminoglycans are decomposed into constitutional disaccharides and are then analyzed. In order to determine disaccharides derived from chondroitin sulfate and dermatan sulfate (CS and DS) and heparan sulfate and heparin (HS and HP), if an enzyme that cleaves both CS and DS or an enzyme that cleaves both HS and HP, such as chondroitinase ABC, is used for decomposition into disaccharides, disaccharides (amounts and types) originally constituting CS and DS and disaccharides (amounts and types) originally constituting HS and HP cannot be distinguished from each other. The amounts and types of disaccharides constituting CS and DS and the amounts and types of disaccharides constituting HS and HP can be distinguished from each other using different enzymes decomposing glycosaminoglycans. The method thereof is not limited. For example, the amount and type of disaccharides constituting CS and the amount and type of disaccharides constituting DS can be examined by comparing the results of disaccharide analysis using chondroitinase ABC (enzyme cleaving both CS and DS), the results of disaccharide analysis using chondroitinase AC I Flavo or AC II Arthro (enzyme not cleaving DS, but cleaving CS only), and the results of disaccharide analysis using chondroitinase B (enzyme not cleaving CS, but cleaving DS only). This can also be applied to HS and HP. The present invention can remarkably simplify the very complicated separation and analytical procedures in known methods and can provide highly efficient analysis. In the present invention, two or more glycosaminoglycans are simultaneously analyzed. The type and number of the glycosaminoglycans are not limited, and the number of glycosaminoglycans may be, for example, three or four. The glycosaminoglycan as the target molecule may have any molecular weight, for example, may have a molecular weight of one hundred to several millions.

The present invention needs to analyze a fluorescence-labeled sample prepared by decomposing glycosaminoglycans to be analyzed into their constitutional units being disaccharides, capturing the disaccharides by glycoblotting, releasing the disaccharides by acid treatment, and subsequently reductively aminating the released disaccharides. The disaccharides as the constitutional units may be decomposed by any method and is usually decomposed with an enzyme such as chondroitinase ABC (Proteus vulgaris), chondroitinase AC I Flavo (Flavobacterium heparinum), chondroitinase AC II Arthro (Arthrobacter aurescens), chondroitinase B (Flavobacterium heparinum), heparinase (Flavobacterium heparinum), heparitinase (Flavobacterium heparinum), hyaluronidase SD (Streptococcus dysgalactiae), keratanase (Pseudomonas sp.), or keratanase II (Bacillus sp.). The conditions such as the concentrations of the enzyme and its substrate, treatment temperature, and treatment time may be those in common methods and are not limited. The resulting disaccharides may be purified by, for example, filtration, gel filtration, or through an adsorption column as necessary. Such purification does not cause any disadvantage and may be performed under appropriate treatment conditions.

In the present invention, the resulting constitutional unit of each glycosaminoglycan, disaccharide, is labeled with fluorescence. The labeling with fluorescence may be performed through any process, such as a method of direct labeling of the disaccharide with fluorescence or a method involving fixing the disaccharide on a carrier surface having hydrazide groups by glycoblotting and then releasing it from the carrier in a sugar chain form having a reducing terminal (hemiacetal structure) while treating with an acid, and opening the reducing terminal of the sugar chain by reductive amination with a compound having an amino group for labeling with fluorescence. The glycoblotting is a method of purifying a sugar chain through sugar chain specific binding between a hydrazide group-containing polymer bead and the reducing terminal of the sugar chain by formation of hydrazone and can purify a sugar chain or a sugar chain derivative from a biological specimen with a simple procedure. In order to conduct the method, a carrier surface having, for example, a hydrazide group or an aminoxy group is commonly used. The carrier may be prepared in accordance with the description in International Publication No. WO 2008/018170 or may be commercially available BlotGlyco (manufactured by Sumitomo Bakelite Co., Ltd.). The capturing may be performed by allowing a solution containing a disaccharide to pass through a column filled with the above-described carrier, or by putting a carrier in a solution containing a disaccharide, or by continuously adding a solution containing a disaccharide to a reaction vessel filled with a carrier with stirring. Any condition can be employed for the capturing reaction.

In the present invention, the disaccharide captured by the carrier is released by acid treatment. Examples of the acid to be used include, but not limited to, acetic acid, trifluoroacetic acid, and hydrochloric acid. The conditions such as the concentration of the acid, treatment temperature, and treatment time may be those in common methods and are not limited.

In the present invention, the disaccharide treated with an acid is subjected to reductive amination. Examples of the reducing agent to be used include, but not limited to, sodium cyanoborohydride, borane-pyridine complex, and picoline borane. The conditions such as the concentration of the reducing agent, treatment temperature, and treatment time may be those in common methods and are not limited. Examples of the fluorescence labeling agent to be used include, but not limited to, 2-aminobenzamide, 2-aminopyridine, 2-aminoacridone, BIDIPY hydrazide, and 2-aminobenzhydrazide. An UV labeling agent such as 1-phenyl-3-methyl-5-pyrazolone (PMP) may be used instead of the fluorescence labeling agent. The conditions such as the concentration of the fluorescence/UV labeling agent, treatment temperature, and treatment time may be those in common methods and are not limited. The disaccharide of the present invention is a compound labeled with fluorescence/UV.

In the present invention, a plurality of glycosaminoglycans from a biological specimen are decomposed into disaccharides, and the disaccharides are labeled with fluorescence. Use of the fluorescence-labeled disaccharides as an analytical sample enables the glycosaminoglycans to be simultaneously separated and analyzed by one-time analysis by high performance liquid chromatography using a zwitterionic column.

The separated molecules can be analyzed by an appropriate method, for example, mass spectrometry (MS) and/or nuclear magnetic resonance (NMR), depending on the type of the target molecule. The separated molecules can be analyzed with an ultraviolet absorption spectrophotometer (UV), an evaporative light scattering detector (ELS), an electrochemical detector, or any other detector, other than mass spectrometry (MS) and/or nuclear magnetic resonance (NMR).

In the method of the present invention, the molecules eluted from the column or analyzed molecules can be fractionated. The fractionated target molecules can be further subjected to another use. The fractionation can be performed by, for example, using a fraction collector.

### EXAMPLES

The present invention will now be described in more detail based on examples, but should not be limited thereto.

### Example 1

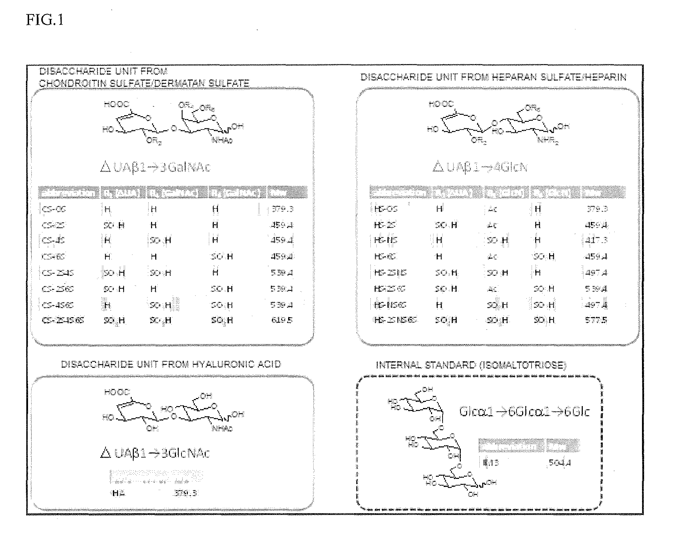

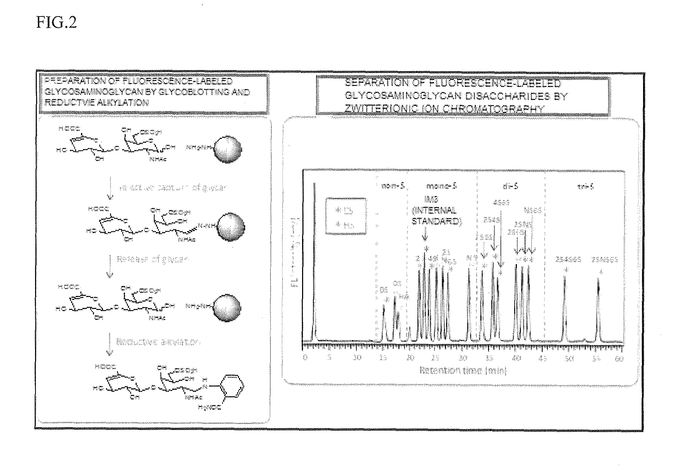

A sugar chain captured by glycoblotting was released by acid treatment (80°C, 45 min) with H₂O/acetic acid/acetonitrile and was reductively aminated (60°C, 2 hours) to give a 2-aminobenzamide (fluorescence) labeled glycosaminoglycan disaccharide. The zwitterionic column used was ZIC-HILIC (2 × 150 mm). The stationary phase of the ZIC column was silica having covalently bonded N,N-dimethyl-N-methacryloyloxyethyl-N-(3-sulfopropyl)ammoniumbetaine on its surface. Gradient elution was performed using eluent A (Milli-Q water), eluent B (acetonitrile), and eluent C (200 mM ammonium acetate) at A/B/C = 5/90/5 (0 min) → A/B/C = 13/82/5 (20 min) → A/B/C = 35/60/5 (60 min). The flow rate was constant at 0.2 mL/min, and a column temperature of 30°C was maintained with a column oven. The fluorescence was detected at an excitation wavelength of 330 nm and a fluorescence wavelength of 420 nm. Fig. 2 shows a method of purification and preparation of a fluorescence-labeled glycosaminoglycan disaccharide and example separation with a zwitterionic column. In the separation, 18 known compounds (including isomaltotriose as an internal standard substance) shown in Fig. 1 were used as glycosaminoglycan disaccharides. The results demonstrate that disaccharides of three glycosaminoglycans: chondroitin sulfate/dermatan sulfate, heparan sulfate/heparin, and hyaluronic acid, can be separated.

### Example 2

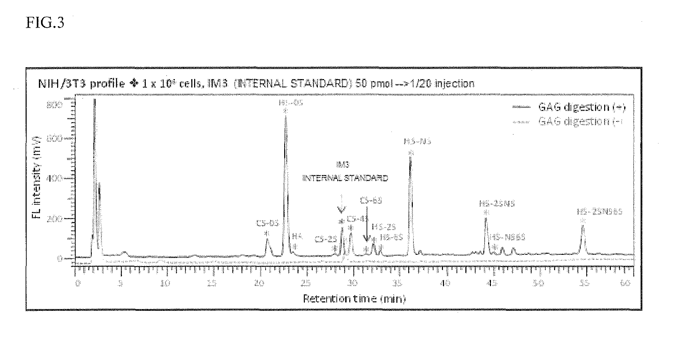

A cell pellet (1×10⁶ cells) of NIH/3T3 (mouse fibroblast-like cell line) was delipidated by ultrasonication and centrifugation with 500 µL of each of chloroform/methanol mixtures in mixing ratios of 2/1, 1/1, and 1/2 in this order and was then subjected to protein digestion with a pronase at 37°C for 12 hours. The sample was then adjusted to contain ethanol and sodium acetate at final concentrations of 80% and 5%, respectively, and was left to stand at 4°C for 2 hours, followed by collection of the pellet by centrifugation. Glycosaminoglycans in the collected pellet were decomposed with 5 mU of each of chondroitinase ABC (Proteus vulgaris), heparinase (Flavobacterium heparinum), heparitinase (Flavobacterium heparinum), and hyaluronidase SD (Streptococcus dysgalactiae). Subsequently, an internal standard substance was added to the resulting disaccharides. After purification by glycoblotting and fluorescence labeling by reductive amination, the disaccharides were separated and analyzed with a ZIC-HILIC column. Fig. 3 shows the analytical results of fluorescence-labeled glycosaminoglycan disaccharides prepared from cultured cells NIH/3T3 (1×10⁶ cells) by the method of the present invention. The results demonstrate that small amounts of three glycosaminoglycan disaccharides: chondroitin sulfate/dermatan sulfate, heparan sulfate/heparin, and hyaluronic acid, contained in a complicated biological specimen such as cultured cells can be separated and analyzed.

### Example 3

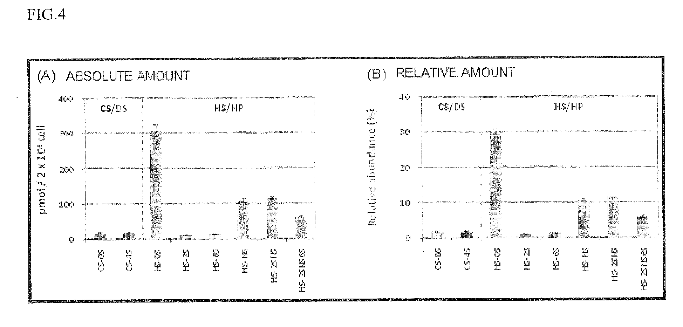

Fig. 4 shows an example showing the reproducibility of data in repeated analyses of disaccharides from glycosaminoglycans contained in a cell pellet (2×10⁶ cells) of CHO-K1 (Chinese hamster-derived epithelial cell line) cultured cells by an experimental procedure as in above. The absolute amount was estimated from the amount of the internal standard. The results demonstrate that the absolute amounts and the relative amounts of glycosaminoglycans contained in cultured cells show high reproducibility.

### Example 4

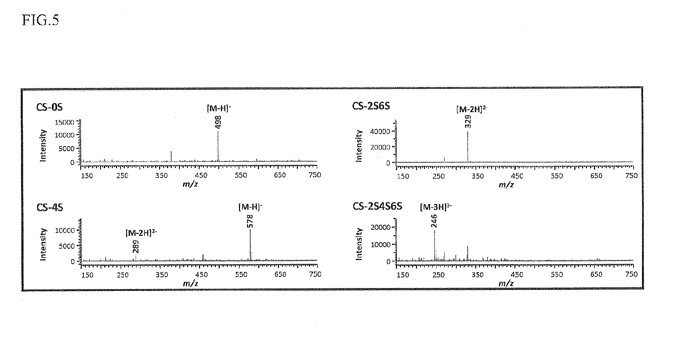

Fluorescence-labeled glycosaminoglycan disaccharides were prepared from the known materials shown in Fig. 1. About 10 pmol of each prepared sample was introduced into a ZIC-HILIC column. The eluate was directly subjected to ESI-MS for measurement in a negative ion mode. Fig. 5 shows parts of LC/MS mass spectra of the fluorescence-labeled glycosaminoglycan saccharides of the known materials shown in Fig. 1. In conventional analysis of glycosaminoglycan disaccharides, reversed phase ion pair chromatography, ion exchange chromatography, or capillary electrophoresis has been generally employed. These methods induce, for example, a significantly low ionization efficiency and are therefore incompatible with connection to a mass spectrometer. The analysis of the present invention enables isolation by HPLC to be performed with an organic solvent in a high concentration (aqueous solution of about 75% acetonitrile) or a volatile salt solvent in a low concentration (about 10 mM ammonium acetate), and thus can provide ready connection to a mass spectrometer.

### INDUSTRIAL APPLICABILITY

The present invention provides simultaneous measurement of a plurality of glycosaminoglycans by one-time analysis. The present invention provides an analytical method that is superior to conventional methods in simplicity and analytical coverage and can analyze glycosaminoglycans contained in various biological materials.

## Claims

1. A method of analyzing a sugar chain comprising simultaneously analyzing two or more glycosaminoglycans by high performance liquid chromatography using a column packed with a stationary phase including anion and cation exchangers.

2. The method of analyzing a sugar chain according to Claim 1, wherein the glycosaminoglycans are selected from compounds composed of chondroitin sulfate or dermatan sulfate, compounds composed of heparan sulfate or heparin, hyaluronic acid compounds, and keratan sulfates.

3. The method of analyzing a sugar chain according to Claim 1 or 2, wherein the anion exchanger is a quaternary ammonium group.

4. The method of analyzing a sugar chain according to any one of Claims 1 to 3, wherein the cation exchanger is a sulfate group and/or a phosphate group.

5. The method of analyzing a sugar chain according to any one of Claims 1 to 4, the method comprising analyzing a fluorescence-labeled sample prepared by decomposing glycosaminoglycans to be analyzed into their constitutional units being disaccharides, capturing the disaccharides by glycoblotting, releasing the disaccharides by acid treatment, and subsequently reductively aminating the released disaccharides.

6. The method of analyzing a sugar chain according to any one of Claims 1 to 5, wherein the fluorescence reagent comprises at least one of 2-aminobenzamide, 2-aminopyridine, and 2-aminoacridone.

7. The method of analyzing a sugar chain according to any one of Claims 1 to 6, the method further comprising mass spectrometry after the analysis of a sugar chain in accordance with the method according to any one of Claims 1 to 6.
